(19) Europäisches Patentamt

European Patent Office

Office européen des brevets

(11) **EP 1 700 877 A1**

(12) **EUROPÄISCHE PATENTANMELDUNG**

| | |
|---|---|
| (43) Veröffentlichungstag:<br>**13.09.2006 Patentblatt 2006/37** | (51) Int Cl.:<br>***C08G 64/02*** *(2006.01)* |

(21) Anmeldenummer: **06003902.1**

(22) Anmeldetag: **27.02.2006**

(84) Benannte Vertragsstaaten:
**AT BE BG CH CY CZ DE DK EE ES FI FR GB GR
HU IE IS IT LI LT LU LV MC NL PL PT RO SE SI
SK TR**
Benannte Erstreckungsstaaten:
**AL BA HR MK YU**

(30) Priorität: **12.03.2005 DE 102005011448**

(71) Anmelder: **Bayer MaterialScience AG
51368 Leverkusen (DE)**

(72) Erfinder:
* **Nefzger, Hartmut, Dr.
  50259 Pulheim (DE)**
* **Schmidt, Manfred, Dr.
  41540 Dormagen (DE)**
* **Barnes, James-Michael
  53547 Breitscheid (DE)**
* **Bauer, Erika
  41363 Jüchen (DE)**

(54) **Poly(urethancarbonat)polyole**

(57) Die vorliegende Erfindung betrifft Poly(urethancarbonat)polyole, ein Verfahren zu ihrer Herstellung und deren Verwendung.

EP 1 700 877 A1

Printed by Jouve, 75001 PARIS (FR)

**Beschreibung**

Die vorliegende Erfindung betrifft Poly(urethancarbonat)polyole, ein Verfahren zu ihrer Herstellung und deren Verwendung.

Homopolymere oder copolymere, hydroxyfunktionelle, aliphatische Polycarbonate sind bekannt. Sie werden im Bereich hochwertiger Polyurethan-Werkstoffe mit hoher Hydrolysefestigkeit eingesetzt. Ihre Herstellung erfolgt normalerweise aus nicht vicinalen Diolen durch Umsetzung mit Diarylcarbonat (DE-A 19 15 908) oder Dialkylcarbonat (DE A 25 55 805). Weiterhin können aliphatische Polycarbonat-Diole aus nicht vicinalen Diolen durch Umsetzung mit Dioxolanonen (DE-OS 25 23 352), Phosgen (DE-OS 15 95 446), Bischloroformiaten (DE-OS 8 57 948) oder Harnstoff (Angew. Chem. 92(1980)742) hergestellt werden. Größere technische Bedeutung hat vor allem das ausschließlich oder überwiegend auf 1,6-Hexandiol basierende Polycarbonatpolyol erreicht. So werden z.B. hochwertige Polyurethanelastomere oder auch Lacke mit Polycarbonatdiolen hergestellt, die auf 1,6-Hexandiol basieren.

Herausragend ist insbesondere die Hydrolysestabilität aus derartigen Polycarbonatpolyolen hergestellten Polyurethane. Sie übertrifft analoge Produkte aus Polyadipatpolyolen bei weitem. Reine Hexandiolpolycarbonate mit zahlenmittleren Molekulargewichten von 500 bis 5000 sind wachsartige Substanzen mit einem Erweichungstemperaturbereich von ca. 45 bis 55°C, abhängig vom Molekulargewicht. Dem entsprechend weisen die daraus hergestellten Polyurethane bei niedrigen Temperaturen einen erhöhten Schubmodul auf, d.h. sie verlieren ihre Flexibilität. Aus diesem Grunde wurden Polycarbonatdiole entwickelt, die diesen Nachteil ausgleichen sollen. Genannt seien z.B. auf Adipinsäure basierende Oligoester (DE-OS 19 64 998), Oligoester auf Basis von Caprolacton (DE-OS 17 70 245) oder niedermolekulare Adipate (EP-A 364 052), oligomere Tetraethylenglykole (DE-OS 22 21 751) und Tetrabutylenglykole. Nachteilig an diesen Bausteinen ist deren leichter hydrolysierbare Estergruppe bzw. die erhöhte Hydrophilie, die zumindest zu einem stärkeren Anquellen der daraus hergestellten PUR-Formkörper führt. Ethergruppen aufweisende Polyethercarbonate wiederum weisen eine verminderte Witterungsbeständigkeit auf.

Des weiteren wurden Polycarbonatpolyole auf Basis sog. Dimerdiole (C36-Gemische) beschrieben (US-A 5,621,065), die auch im Gemisch mit beispielsweise 1,6-Hexandiol Polycarbonate mit vermindertem Schmelzpunkt und verminderter Viskosität ergeben. Copolycarbonatpolyole auf Basis kürzerkettiger Diole sind zwar ebenfalls flüssig bei Raumtemperatur, aber gewöhnlich vergleichsweise hochviskos.

Schließlich sind in der Literatur auch Polyurethancarbonate beschrieben, die durch Umsetzung von Polycarbonaten mit niedermolekularen Diaminen hergestellt werden (EP-A 624 614). Derartige Polyole enthalten auch freie Aminoendgruppen. Bei Verwendung von Aminoalkoholen (DE-A 196 19 237) werden dagegen Polyurethancarbonate mit Hydroxylendgruppen erhalten.

Beide letztgenannten Methoden zur Herstellung von Polyurethancarbonatpolyolen weisen jedoch den Nachteil auf, dass es sich um eine das Molekulargewicht abbauende Reaktion handelt, d.h. je höher der Anteil des Diamins, bzw. des Aminoalkohols ist, desto höhermolekularer und damit aufwändiger herzustellen muss das als Ausgangsverbindung eingesetzte Polycarbonat gewählt werden. Weiterhin ist nachteilig, dass in Aminoalkoholen nur die Hälfte der funktionellen Gruppen, nämlich die Aminogruppen, an der Umsetzung teilnehmen. Um einen bestimmten Gehalt an Urethangruppen aufzubauen muss im Vergleich zum entsprechenden Diamin die doppelte Menge flminoalkohol eingesetzt werden, was wiederum unmittelbar zur Folge hat, dass das einzusetzende Polycarbonat ebenfalls die doppelte Molmasse aufweisen muss, will man zu einem Polyurethancarbonat vorgegebener Molmasse gelangen. Diese Nachteile und Einschränkungen bei der Herstellung von Polyurethancarbonaten galt es mit der vorliegenden Erfindung zu überwinden.

Es wurde nun gefunden, das sich Poly(urethancarbonat)polyole erhalten lassen, indem man niedermolekulare Polyole mit Polyisocyanat zu einem Prepolymeren mit endständigen OH-Gruppen vorreagiert und anschließend mit Kohlensäurederivaten polykondensiert. Gegenstand der Erfindung sind daher Poly(urethancarbonat)polyole und ein Verfahren zu ihrer Herstellung.

Die erfindungsgemäßen Poly(urethancarbonat)polyole weisen endständige Hydroxylgruppen auf und enthalten Baueinheiten der allgemeinen Formeln {O-[$R_1$-O-C(O)-NH-$R_2$-NH-C(O)-O-]$_a R_1$-O}$_n$ und [-C(O)-O], worin $R_1$ gleiche oder verschiedene Alkylen-, Cylcoalkylen-, oder Oxaalkylengruppen mit 4 bis 12 C-Atomen, $R_2$ Alkylen- oder Cylcoalkylengruppen mit 6 bis 14 C-Atomen, und a und n bezogen auf die Einzelspezies natürliche Zahlen, bezogen auf das Molekülensemble auch gebrochenzahlige Zahlen bedeuten. Bevorzugte Reste $R_1$ sind 1,4-Butylen, 1,5-Pentylen, 1,6-Hexylen, 3-Methyl-1,5-pentylen, 1,7-Heptylen, 1,8-Octylen, 1,9-Nonylen, 1,10-Decylen, 1,12-Dodecylen, 3-Oxa-1,5-pentylen, 3,6-Dioxa-1,8-octylen, 3,6,9-Trioxa-1,11-undecylen und 7-Oxa-1,13-tridecylen. Bevorzugte Reste $R_2$ sind 1,6-Hexylen, 1,8-Octylen, Isophorylen und 4,4'-Dicyclohexylmethylen.

Die erfindungsgemäßen Poly(urethancarbonat)polyole lassen sich herstellen, indem aliphatische Polyole und aliphatische Polyisocyanate zu Prepolymeren mit terminalen Hydroxylgruppen umgesetzt werden und diese Prepolymere anschließend mit Kohlensäurederivaten polykondensiert werden.

In einer besonderen Ausführungsform der Erfindung werden die erfindungsgemäßen Poly(urethan-carbonat) polyole erhalten durch Polykondensation von OH-terminierten Prepolymeren der allgemeinen Formel

$$\text{HO-}[R_1\text{-O-C(O)-NH-}R_2\text{-NH-C(O)-O-]}_a R_1\text{-O-H}$$

wobei

$R_1$  gleiche oder verschiedenartige Alkylenreste von Polyolen,

$R_2$  gleiche oder verschiedenartige Alkylenreste von Polyisocyanaten, und

a  bezogen auf die Einzelspezies eine natürliche Zahl, bezogen auf das Ensemble einen gebrochenzahligen Mittelwert bedeuten

mit carbonatbildenden Verbindungen der allgemeinen Formel

$$R_3\text{-C(O)-}R_4,$$

wobei

$R_3, R_4$  gleiche oder verschiedenartige Reste aus der Oxyalkyl-, Oxyaryl-, Cl-, Oxyalkylen- und Oxyarylenreste umfassenden Gruppe bedeuten.

Die OH-terminierten Prepolymeren werden bevorzugt durch Umsetzung von niedermolekularen Polyolen HO-$R_1$-OH mit Polyisocyanaten OCN-$R_2$-NCO hergestellt.

Beispiele geeigneter niedermolekularer Polyole sind 1,4-Butandiol, 1,5-Pentandiol, 1,6-Hexandiol, 3-Methylpentan-1,5-diol, 1,7-Heptandiol, 1,8-Octandiol, 1,9-Nonandiol, 1,10-Decandiol, 1,12-Dodecandiol, Oligomere des 1,6-Hexandiols, des Ethylen- und Propylenglykols, z.B. Diethylenglykol, Triethylenglykol, Tetraethylenglykol, Dipropylenglykol oder Tetrapropylenglykol. Weiterhin können zum Zwecke der Erhöhung der Funktionalität auch kleine Mengen Trimethylolethan, Trimethylolpropan oder Pentaerythrit mitverwendet werden. Weiterhin können auch sog. Dimerdiole (z.B. Pripol® 2033 der Fa. Uniqema) verwendet werden. Selbstverständlich sind auch hydroxylgruppenfunktionelle Derivate einsetzbar, die durch Veresterung aus den niedermolekularen Polyolen hergestellt werden können, umfaßt. Als Umsetzungskomponenten für derartige veresterte Derivate kommen beispielsweise die Dicarboansäuren Bernsteinsäure, Glutarsäure und Adipinsäure ebenso in Frage wie Phthalsäure und aus ε-Caprolacton abgeleitete Verbindungen. Selbstverständlich sind auch Gemische aus Vertretern der Gruppe der niedermolekularen Polyole und deren veresterte Derivate einsetzbar.

Zur Herstellung der OH-terminierten Prepolymeren geeignete Polyisocyanate sind aliphatische oder cycloaliphatische, überwiegend bifunktionelle Isocyanate. Beispielhaft seien aufgeführt: 1,6-Hexamethylendiisocyanat, 1,8-Octamethylendiisocyanat, Isophorondiisocyanat, cis,trans-4,4'-Methylen-bis(cyclohexylisocyanat), trans,trans-4,4'-Methylen-bis(cyclohexylisocyanat), sowie NCO-Prepolymere, die unter Verwendung dieser Polyisocyanate hergestellt werden. Selbstverständlich sind auch Gemische aus Vertretern dieser Gruppe einsetzbar.

Die Herstellung des OH-terminierten Prepolymeren erfolgt erfindungsgemäß bei Temperaturen oberhalb 23°C, bevorzugt oberhalb 50°C, besonders bevorzugt von 60 bis 135°C, wobei die Gegenwart eines Katalysators nicht zwingend notwendig ist. Normalerweise wird die Reaktion unter Stickstoff bei Normaldruck ausgeführt, sie kann aber auch unter vermindertem oder erhöhtem Druck erfolgen.

Das molare Mischungsverhältnis von Polyol- und Polyisocyanatkomponente bemisst sich nach dem gewünschten Verhältnis von Urethan- zu Carbonatgruppen im späteren Endprodukt.

Das so erhaltene OH-terminierte Prepolymer wird anschließend mit einem Kohlensäurederivat $R_3$-C(O)-$R_4$ aus der Gruppe der Diaryl-, Dialkyl-Carbonate, bzw. der α,ω-Bischloroformiate weiter umgesetzt. Beispiele für geeignete Diarylcarbonate sind Diphenylcarbonat und Ditolylcarbonat, geeignete Dialkylcarbonate sind beispielsweise Dimethylcarbonat und Diethylcarbonat. Besonders bevorzugt sind Diphenylcarbonat und Dimethylcarbonat. Bevorzugte α,ω-Bischloroformiate sind solche, die sich aus niedermolekularen Polyolen herstellen lassen, besonders bevorzugt 1,4-Butandiolbischloroformiat und 1,6-Hexandiolbischloroformiat, sowie das α,ω-Bischloroformiat des Bisphenol A. Weiterhin bevorzugt ist Phosgen.

Im erfindungsgemäßen Verfahren werden die OH-terminierten Prepolymeren mit dem Kohlensäurederivat $R_3$-C(O)-$R_4$ zur Reaktion gebracht, wobei die Temperatur 120° bis 220°C, bevorzugt 120°C bis 200°C beträgt, und ein Druck von 0,1 bis 200 mbar, bevorzugt 0,1 bis 100 mbar gewählt wird. Das Kohlensäurederivat wird hierbei im molaren Unterschuss eingesetzt, wobei sich das angestrebte zahlenmittlere Molekulargewicht $M_n$ des Poly(urethancarbonat)polyols nach folgender Formel errechnet:

$$M_n = n * M_n(\text{OH-Prepolymer}) + (n-1) * 28$$

wobei n die Anzahl der Mole an eingesetztem OH-terminiertem Prepolymer und (n-1) die Anzahl Mole Kohlensäurederivat bedeuten.

$M_n$(OH-Prepolymer), das zahlenmittlere Molekulargewicht des OH-terminierten Prepolymers, errechnet sich hierbei aus der Stöchiometrie der Umsetzung von niedermolekularen Polyolen HO-$R_1$-OH mit Polyisocyanaten OCN-$R_2$-NCO und beträgt im Allgemeinen 90,5 bis 1000, bevorzugt 91 bis 800, besonders bevorzugt 103 bis 500 Da.

Das zahlenmittlere Molekulargewicht $M_n$ des Poly(urethancarbonat)polyols beträgt bevorzugt 350 bis 5000, besonders bevorzugt 400 bis 4000, insbesondere 500 bis 2500 Da.

Die Reaktion kann durch Basen oder Übergangsmetallverbindungen katalysiert werden. Beispielhaft seien genannt: Magnesiumhydroxidcarbonat, Dibutylzinnoxid, Bis(tributylzinnoxid), Titantetrabutylat, Ytterbiumacetylacetonat.

Die erfindungsgemäßen Poly(urethancarbonat)polyole sind in Abhängigkeit von der Art und den Mengenverhältnissen ihrer Aufbaukomponenten sowie ihres Molekulargewichts bei Raumtemperatur flüssig, wachsartig fest oder auch hochkristallin.

Beispielsweise führt der Aufbau eines OH-terminierten Prepolymeren aus Hexamethylendiisocyanat und Hexandiol im Molverhältnis 1:4 und dessen Umsetzung mit Diphenylcarbonat zu einem Poly(urethancarbonat)polyol mit einer OH-Zahl von 50 mg KOH/g, das einen um ca. 60°C höheren Schmelzpunkt aufweist als ein analoges, nur auf Hexandiol basierendes Poly(carbonat)polyol gleicher OH-Zahl. Ein stöchiometrisch analog aufgebautes Poly(urethancarbonat)polyol auf Basis von $H_{12}$-MDI als Polyisocyanatkomponente ist dagegen vollständig amorph und nicht kristallisationsfähig.

Die erfindungsgemäßen Poly(urethancarbonat)polyole können in molekulargewichtsaufbauenden Polyadditions- oder Polykondensationsreaktionen eingesetzt werden, beispielsweise als Ausgangsstoffe für die Herstellung von Polyurethanen, beispielsweise Polyurethan-Gießelastomeren.

**Beispiele**

**Beispiel 1**

In einen 41-Vierhalskolben mit Heizpilz, Rührer, Thermometer, Tropftrichter und einer mit beheizbarer Destillationsbrücke versehenen Kolonne (gefüllt mit Raschig-Ringen) wurden 1180 g (10 Mol) 1,6-Hexandiol bei 60°C vorgelegt. Über den Tropftrichter wurden 420 g (2,5 Mol) 1,6-Hexamethylendiisocyanat unter Rühren so zugetropft, dass die Temperatur der Reaktionsmischung 120°C nicht überstieg. Zur Vervollständigung der Reaktion rührte man 2 Stunden nach. Bei 120°C wurden 1379 g (6,44 Mol) Diphenylcarbonat eingerührt. Man gab 60 mg Dibutylzinnoxid zu und erwärmte für 1 Stunde auf 180°C. Man kühlte auf 120°C ab und verminderte den Druck auf 15 mbar. Das zuvor gebildete Phenol wurde abdestilliert. Man erhöhte die Reaktionstemperatur langsam auf 200°C, wobei Phenol zügig abdestillierte. Nach ca. 10 Std. waren 200°C erreicht und die Phenoldestillation kam zum Erliegen. Man verminderte den Druck auf 0,5 mbar und entfernte letzte Reste von Phenol.

Ausbeute Phenol: 1204 g, Theorie: 1210 g (12,89 Mol).

OHZ: 50,6 mg KOH/g, Schmelzbereich 100 - 120°C.

**Beispiel 2**

In einen 41-Vierhalskolben mit Heizpilz, Rührer, Thermometer, Tropftrichter und einer mit beheizbarer Destillationsbrücke versehenen Kolonne (gefüllt mit Raschig-Ringen) wurden 1180 g (10 Mol) 1,6-Hexandiol bei 60°C vorgelegt. Über den Tropftrichter wurden 420 g (2,5 Mol) 1,6-Hexamethylendiisocyanat unter Rühren so zugetropft, dass die Temperatur der Reaktionsmischung 120°C nicht überstieg. Zur Vervollständigung der Reaktion rührte man 2 Stunden nach. Bei 120°C wurden 1177 g (5,5 Mol) Diphenylcarbonat eingerührt. Man gab -60 mg Dibutylzinnoxid zu und erwärmte für 1 Stunde auf 180°C. Man kühlte auf 120°C ab und verminderte den Druck auf 15 mbar. Das zuvor gebildete Phenol wurde abdestilliert. Man erhöhte die Reaktionstemperatur langsam auf 200°C, wobei Phenol zügig abdestillierte. Nach ca. 10 Std. waren 200°C erreicht und die Phenoldestillation kam zum Erliegen. Man verminderte den Druck auf 0,5 mbar und entfernte letzte Reste von Phenol.

Phenolausbeute: 1034 g, Theorie: 1034 g (11 Mol).).

OHZ: 113,9 mg KOH/g, Schmelzbereich 100 - 120°C.

**Beispiel 3**

In einen 41-Vierhalskolben mit Heizpilz, Rührer, Thermometer, Tropftrichter und einer mit beheizbarer Destillationsbrücke versehenen Kolonne (gefüllt mit Raschig-Ringen) wurden 1180 g (10 Mol) 1,6-Hexandiol bei 60°C vorgelegt. Über den Tropftrichter wurden 655 g (2,5 Mol) $H_{12}$ MDI (Desmodur® W, Bayer AG) unter Rühren so zugetropft, dass die Temperatur der Reaktionsmischung 120°C nicht überstieg. Zur Vervollständigung der Reaktion rührte man 2 Stunden nach. Bei 120°C wurden 1335 g (6,24 Mol) Diphenylcarbonat eingerührt. Man gab 60 mg Dibutylzinnoxid zu und erwärmte für 1 Stunde auf 180°C. Man kühlte auf 120°C ab und verminderte den Druck auf 15 mbar. Das zuvor gebildete Phenol wurde abdestilliert. Man erhöhte die Reaktionstemperatur langsam auf 200°C, wobei Phenol zügig abdestillierte. Nach ca. 10 Std. waren 200°C erreicht und die Phenoldestillation kam zum Erliegen. Man verminderte den Druck auf 0,5 mbar und entfernte letzte Reste von Phenol.
Phenolausbeute: 1161 g, Theorie: 1173 g (12,48 Mol).
OHZ: 54,5 mg KOH/g. Glasübergangstemperatur: -49°C.

**Beispiel 4**

In einen 41-Vierhalskolben mit Heizpilz, Rührer, Thermometer, Tropftrichter und einer mit beheizbarer Destillationsbrücke versehenen Kolonne (gefüllt mit Raschig-Ringen) wurden 1180 g (10 Mol) 1,6-Hexandiol bei 60°C vorgelegt. Über den Tropftrichter wurden 420 g (2,5 Mol) Isophorondiisocyanat unter Rühren so zugetropft, dass die Temperatur der Reaktionsmischung 120°C nicht überstieg. Zur Vervollständigung der Reaktion rührte man 2 Stunden nach. Bei 120°C wurden 1442 g (6,27 Mol) Diphenylcarbonat eingerührt. Man gab 60 mg Dibutylzinnoxid zu und erwärmte für 1 Stunde auf 180°C. Man kühlte auf 120°C ab und verminderte den Druck auf 15 mbar. Das zuvor gebildete Phenol wurde abdestilliert. Man erhöhte die Reaktionstemperatur langsam auf 200°C, wobei Phenol zügig abdestillierte. Nach ca. 10 Std. waren 200°C erreicht und die Phenoldestillation kam zum Erliegen. Man verminderte den Druck auf 0,5 mbar und entfernte letzte Reste von Phenol.
Phenolausbeute: 1179 g, Theorie: 1168 g (12,54 Mol).
OHZ: 61,5 mg KOH/g, Glasübergangstemperatur: -11,5°C.

**Beispiel 5**

In einem 41-Vierhalskolben mit Heizpilz, Rührer, Thermometer, Tropftrichter und einer mit beheizbarer Destillationsbrücke versehenen Kolonne (gefüllt mit Raschig-Ringen) wurden 1832 g (10 Mol) Hexandiolether (teilveräthertes Hexandiol mit OHZ 551 mg KOH/g) bei 60°C vorgelegt. Über den Tropftrichter wurden 151 g (0,9 Mol) Hexamethylendiisocyanat unter Rühren so zugetropft, dass die Temperatur der Reaktionsmischung 120°C nicht überstieg. Zur Vervollständigung der Reaktion rührte man 2 Stunden nach. Bei 120°C wurden 1412 g (6,6 Mol) Diphenylcarbonat eingerührt. Man gab 80 mg Dibutylzinnoxid zu und erwärmte für 1 Stunde auf 180°C. Man kühlte auf 120°C ab und verminderte den Druck auf 15 mbar. Das zuvor gebildete Phenol wurde abdestilliert. Man erhöhte die Reaktionstemperatur langsam auf 200°C, wobei Phenol zügig abdestillierte. Nach ca. 10 Std. waren 200°C erreicht und die Phenoldestillation kam zum Erliegen. Man verminderte den Druck auf 0,5 mbar und entfernte letzte Reste von Phenol.
Phenolausbeute: 1238 g, Theorie: 1241 g (13,2 Mol).
OHZ: 74 mg KOH/g, theoret. 78 mgKOH/g, Viskosität: 760 mPas (75°C). Endgruppenanalyse: Phenylcarbonato 0,14 Gew.-%, Phenoxy 0,01 Gew.-%

Herstellung eines Prepolymeren:

602 g dieses Polyurethancarbonatpolyols (OH-Zahl 74 mg KOH/g) wurden bei 75°C in 398 g 4,4'-Diphenylmethandiisocyanat (Desmodur® 44M, Bayer MaterialScience AG) unter Stickstoff eingerührt und für 2 Std. bei 80°C reagiert. Man bestimmte den NCO-Gehalt zu 9,94 Gew.-% NCO (Theorie: 10,0 Gew.-%), bzw. 9,74 Gew.-% nach 72 stündiger Lagerung bei 80°C. Die Viskosität direkt nach der Herstellung betrug 1880 mPas (70°C), nach 72 stündiger Lagerung bei 80°C 2190 mPas (70°C).

Herstellung eines Gießelastomers

200g dieses NCO-Prepolymeren wurden auf 80°C erwärmt und unter Vakuum für 2 Std. entgast. Man rührte 20,5 g 1,4-Butandiol so ein, dass die reagierende Schmelze blasenfrei blieb. Nach 20 Sekunden goss man in auf 100°C vorgewärmte, mit Trennmittel vorbehandelte Formen und ließ bei 110°C für 16 Stunden im Trockenschrank nachreagieren. Nach 21-tägiger Lagerung bei Raumtemperatur bestimmten man folgende mechanischen Eigenschaften:
Härte: 95 ShoreA, 45 ShoreD

Weiterreißfestigkeit: 29 kN/m
Rückprallelastizität: 30%
Zug-Dehnungs-Verhalten:

| Dehnung | Spannung |
|---------|----------|
| [%] | [MPa] |
| 10 | 6 |
| 20 | 8,5 |
| 40 | 11,5 |
| 100 | 18 |
| 200 | 34,5 |

Reißspannung:     49 MPa

Reißdehnung:      285 %

Schmelzbereich:    160 - 190°C, Maximum: 171°C (DSC)

Weitere physikalische Eigenschaften der erhaltenen Polyurethancarbonatpolyole sind in Tab. 1 zusammengefasst.

**Tabelle 1**: Übersicht Produkteigenschaften der Polyurethancarbonatpolyole aus Beispielen 1 - 5.

| Beispiel | | 1 | 2 | 3 | 4 | 5 |
|----------|--|---|---|---|---|---|
| OHZ | [mg KOH/g] | 50,6 | 113,9 | 54,5 | 61,5 | 74 |
| Viskosität / 50% in DMA[1] | [mPas@50°C | n.b. | 120 | 170 | 97 | n.b. |
| Viskosität in Substanz | [mPas@50°C | n.b. | n.b. | n.b. | n.b. | 760 |
| Schmelzbereich | [°C] | 100-120 | 100-120 | n.v. | n.v. | n.v. |
| Glasübergangstemperatur | [°C] | n.b. | - 49 | - 9 | - 11,5 | n.b. |
| Löslichkeit in DMA | [bei 25°C] | n.b. | etwas trüb | klar | klar | klar |
| [1]DMA: N,N-Dimethylacetamid | | | | | | |

**Patentansprüche**

1.  Poly(urethancarbonat)polyole mit endständigen Hydroxylgruppen, enthaltend Baueinheiten der allgemeinen Formeln $\{O-[R_1-O-C(O)-NH-R_2-NH-C(O)-O-]_a R_1-O\}_n$ und $[-C(O)-O]$, worin $R_1$ gleiche oder verschiedene Alkylen-, Cylcoalkylen-, oder Oxaalkylengruppen mit 4 bis 12 C-Atomen, $R_2$ Alkylen- oder Cylcoalkylengruppen mit 6 bis 14 C-Atomen und a und n bezogen auf die Einzelspezies natürliche Zahlen, im Bezug auf das Ensemble auch gebrochenzahlige Mittelwerte bedeuten.

2.  Verfahren zur Herstellung von Poly(urethancabonat)polyolen nach Anspruch 1, bei dem aliphatische Polyole und aliphatische Polyisocyanate zu Prepolymeren mit terminalen Hydroxylgruppen umgesetzt werden und diese Prepolymere anschließend mit Kohlensäurederivaten polykondensiert werden.

3.  Verwendung der Poly(urethancarbonat)polyole nach Anspruch 1 in molekulargewichtsaufbauenden Polyadditions- oder Polykondensationsreaktionen.

4.  Verwendung der Poly(urethancarbonat)polyole nach Anspruch 1 zur Herstellung von geschäumten oder massiven Polyurethanen.

**Europäisches Patentamt**

# EUROPÄISCHER RECHERCHENBERICHT

Nummer der Anmeldung

EP 06 00 3902

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 33 23 684 A1 (PPG INDUSTRIES,INC; PPG INDUSTRIES, INC., PITTSBURGH, PA., US) 5. Januar 1984 (1984-01-05) * Seite 6; Beispiele * * Seite 7, Zeile 18 - Seite 8, Zeile 13 * ----- | 1,3,4 | INV. C08G64/02 |
| A,D | US 5 621 065 A (PUDLEINER ET AL) 15. April 1997 (1997-04-15) ----- | | |
| A | US 4 820 830 A (BLANK ET AL) 11. April 1989 (1989-04-11) ----- | | |

RECHERCHIERTE SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| München | 6. April 2006 | Lohner, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**EP 1 700 877 A1**

**ANHANG ZUM EUROPÄISCHEN RECHERCHENBERICHT**
**ÜBER DIE EUROPÄISCHE PATENTANMELDUNG NR.**

EP 06 00 3902

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-04-2006

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| DE 3323684 | A1 | | 05-01-1984 | DE | 3348041 | C2 | 25-07-1991 |
| | | | | FR | 2529559 | A1 | 06-01-1984 |
| | | | | GB | 2123841 | A | 08-02-1984 |
| | | | | IT | 1163597 | B | 08-04-1987 |
| US 5621065 | A | | 15-04-1997 | DE | 19513164 | A1 | 10-10-1996 |
| | | | | JP | 3236214 | B2 | 10-12-2001 |
| | | | | JP | 8283399 | A | 29-10-1996 |
| | | | | NL | 1002800 | C1 | 08-10-1996 |
| US 4820830 | A | | 11-04-1989 | CA | 1341178 | C | 13-02-2001 |
| | | | | DE | 3789016 | D1 | 17-03-1994 |
| | | | | DE | 3789016 | T2 | 07-07-1994 |
| | | | | EP | 0280815 | A2 | 07-09-1988 |
| | | | | ES | 2061517 | T3 | 16-12-1994 |
| | | | | JP | 1974838 | C | 27-09-1995 |
| | | | | JP | 7002704 | B | 18-01-1995 |
| | | | | JP | 63227557 | A | 21-09-1988 |

EPO FORM P0461

Für nähere Einzelheiten zu diesem Anhang : siehe Amtsblatt des Europäischen Patentamts, Nr.12/82

8

**IN DER BESCHREIBUNG AUFGEFÜHRTE DOKUMENTE**

**In der Beschreibung aufgeführte Patentdokumente**

- DE 1915908 A
- DE 2555805 A
- DE 2523352 A
- DE 1595446 A
- DE 857948 A
- DE 1964998 A
- DE 1770245 A
- EP 364052 A
- DE 2221751 A
- US 5621065 A
- EP 624614 A
- DE 19619237 A

**In der Beschreibung aufgeführte Nicht-Patentliteratur**

- **HARNSTOFF.** *Angew. Chem.,* 1980, vol. 92, 742